# EUROPÄISCHE PATENTSCHRIFT

(11) **EP 1 726 764 B1**
(45) Veröffentlichungstag und Bekanntmachung des Hinweises auf die Patenterteilung: **30.10.2013**
(21) Anmeldenummer: 06010892.5
(22) Anmeldetag: 24.05.2006
(51) Int. Cl.: E06B 3/20

(54) **Profil und Verfahren zu dessen Herstellung**
Profile and method of its manufacturing
Profilé et procédé pour sa fabrication

(30) Priorität: 25.05.2005 AT 8962005
(43) Veröffentlichungstag der Anmeldung: 29.11.2006
(73) Patentinhaber: IFN-Holding AG, 4050 Traun (AT)
(72) Erfinder: Seibt, Christian, 4050 Traun (AT)
(74) Vertreter: Ofner, Clemens

(56) Entgegenhaltungen:
- CH-A- 444 462
- DE-A1- 10 107 211
- DE-A1- 10 310 958
- DE-U1- 29 603 857
- GB-A- 2 153 419

## Beschreibung

Die Erfindung betrifft ein Verfahren zur Herstellung eines extrudierten oder Strangpressen Hohlkammerprofils für ein Fenster oder eine Tür gemäss dem Anspruch 1 sowie durch Extrusion oder Strangpressen hergestellte Hohlkammerprofile gemäss den Ansprüchen 11 und 12.

Zum Verschließen von Fenster und Türen ist es notwendig, entweder zwischen den Fensterflügeln bei mehrflügeligen Fenstern oder zwischen einem Blendrahmen und dem Flügelrahmen des Fensters oder der Tür Beschläge vorzusehen. Derartige Beschläge werden üblicherweise nach Fertigstellung des Fensters bzw. der Tür bzw. des Blendrahmens auf die jeweiligen Profilelemente nachträglich aufgeschraubt. Somit ragen diese Beschläge über weite Bereiche in den Falzraum zwischen dem Blendrahmen und dem Fensterrahmen. Dadurch wird nicht nur das Aussehen des geöffneten Fensters bzw. Tür beeinträchtigt - üblicherweise sind diese Beschläge aus einer Kupferlegierung wie z.B. Messing, sodass sie beispielsweise bei weißen Fenstern deutlich hervorstechen - sondern ist damit auch eine erhöhte Einbruchsgefahr verbunden, da Schließzapfen, die z.B. in Schließbleche eingreifen, leichter ausgehebelt werden können. Darüber hinaus ist gerade bei Einbruchsdiebstählen eine Schwachstelle bei derartigen Beschlagsmontagen, dass diese mit dem Profil verschraubt werden, sodass also die Kraftübertragung bei gewaltsamer Öffnung des Fensters bzw. der Tür nur punktuell in das Profil des Rahmens erfolgt und in der Folge eine erhöhte Bruchgefahr gegeben ist.

Zur Vermeidung dieser Probleme ist aus der DE 103 10 958 A1 ein Kunststoffrahmenprofil für Fenster und/oder Türen, insbesondere Blendrahmenprofil, mit einer Mehrzahl von Kammern und mit einem zu einem Falzluftbereich ausgerichteten Falzluft-Wandungsbereich bekannt, bei dem in einer ersten Kammer ein Armierungsmittel einsetzbar ist. Der Falzluft-Wandungsbereich weist einen Aufnahmekanal auf, zur Aufnahme von Schließmitteln mit einem zum Falzluftbereich ausgerichteten, in Längsrichtung des Aufnahmekanals verlaufenden Öffnungsspalt, wobei das Verhältnis der Höhe des Aufnahmekanals zur Breite des Aufnahmekanals zwischen 1:2 und 2:1 liegt. Die Schließmittel sind dabei in den Kanal einschiebbar oder einclipsbar ausgeführt. Die Schließmittel selbst sind mit einem darunter liegenden Armierungsmittel für das Profil verschraubt bzw. über Aufnahmekanal-Schenkel in Form einer Schnappverbindung fixiert.

Aufgabe der vorliegenden Erfindung ist es ein derartiges Profil in Bezug auf die Anordnung von Schließmitteln zu verbessern.

Diese Aufgabe der Erfindung ist jeweils eigenständig durch das erfindungsgemäße Verfahren gemäss dem Anspruch 1, das Profil gemäss dem Anspruch 11 oder Anspruch 12 gelöst.

Von Vorteil ist dabei, dass bei dem Verfahren das Schließelement während des Formgebungsprozesses bereits in das Profil eingeschlossen wird, sodass eine großflächige, formschlüssige Verbindung zwischen dem Schließelement und dem Profilkörper hergestellt werden kann. Damit entfällt eine aufwendige nachträgliche Montage, wodurch die Durchlaufzeiten des Profils bis zum fertigen Blendrahmen bzw. Fenster- bzw. Türrahmen deutlich verkürzt werden können und somit auch die Herstellungskosten hierfür sinken. Darüber hinaus ist damit ein besserer Halt des Schließelementes im Profilkörper selbst erzielbar. Es ist aber auch möglich das Profil selbst derart auszubilden, dass das Schließelement nachträglich eingelegt werden kann, sodass also unterschiedlichste Schließelemente, wobei unterschiedlichste auch in Bezug auf unterschiedliche Hersteller verstanden wird, je nach Bedarfsfall verwendet werden können. Durch die Verschwenkbarkeit des Abdeckelementes, insbesondere der Deckwand der Kammer des Profils, ist zum einen eine leichte Zugänglichkeit dieser Kammer von außen möglich, sodass also das Einschieben von sehr langen Schließelementen in diese Kammer vermieden wird (insbesondere besteht beim Einschieben das Problem das auf Grund größer werdender Reibung, insbesondere wenn der Querschnitt der Kammer nur geringfügig größer gewählt wird als der Querschnitt des Schließelementes, durch die benötigten größeren Kräfte Beschädigungen am Profil selbst, insbesondere dessen Oberfläche entstehen können). Durch die Verschwenkbarkeit dieses Abdeckelementes ist es weiters möglich, dieses nach dem Einlegen in seine Ausgangslage zurück zuschwenken, sodass also die Kammer im Wesentlichen über große Bereiche allseitig umschlossen ist und damit wiederum eine bessere Optik des fertigen Profils und ein besserer Schutz des Schließelementes vor äußeren Umwelteinflüssen, wie Verschmutzung, erreicht wird. Durch die Verschwenkbarkeit ist aber auch ein nachträglicher Austausch dieser Schließelemente, beispielsweise für Wartungsarbeiten oder nach einem Bruch eines Schließelementes, möglich ohne dass das Fenster bzw. der Blendrahmen zerstört werden müsste (derartige Rahmen sind auf Gehrung geschnitten üblicherweise an den Ecken durch verschweißen miteinander verbunden).

Als Werkzeug für die Herstellung des Profils kann eine Extrusionsdüse oder ein Strangpresswerkzeug verwendet werden, sodass also dieses Profil in großem Umfang kontinuierlich hergestellt werden kann.

Andererseits ist es möglich als Werkzeug eine Spritzgussform zu verwenden, mit dem Vorteil, dass Profile mit komplexeren Querschnitten hergestellt werden können bzw. wenn eine automatische, kontinuierliche Zufuhr des Schließmittels aufgrund dessen Geometrie nur mit größerem Aufwand bzw. überhaupt nicht erfolgen kann. Diese Methode eignet sich insbesondere auch für Einzelanfertigungen.

Das zumindest eine Schließelement kann nach einer Ausführungsvariante des Verfahrens beabstandet zu einer Wandung des Werkzeuges eingelegt bzw. in diese eingeführt werden, sodass dieses also zumindest annähernd vollständig zumindest über drei Wände, d.h. die Bodenwand und zumindest zwei daran angrenzende Seitenwände, von dem Profilwerkstoff umgeben wird und damit die Halterung des zumindest einen Schließelementes in der zumindest einen Kammer weiter verbessert werden kann.

Zur Erhöhung der Haftfähigkeit kann die Oberfläche des zumindest einen Schließelementes zumindest teilweise in jenen Bereichen, die den Wandungen zugeordnet sind mit einem Haftvermittler versehen werden. Von Vorteil ist dabei, wenn dieser Haftvermittler aus einem polymerisierbaren Material besteht, wobei die Polymerisation vorzugsweise während der Formgebung des Profils erfolgt, sodass gegebenenfalls neben adhäsiven Bindungskräften auch covalente Bindungen zum Profilwerkstoff ausgebildet werden.

Zur Erhöhung der Haftfähigkeit bzw. der Halterung des Schließelementes in der Kammer ist es auch möglich, dass das Schließelement zumindest eine Ausnehmung und/oder zumindest einen Durchbruch in der, der Bodenwand und/oder zumindest einer der Seitenwände zugekehrten Wandung des Schließelementes aufweist, sodass damit das Einfließen des zumindest zähplastischen Werkstoffes für das Profil während der Formgebung ermöglicht wird.

Die zumindest eine Kammer kann mit einem Abdeckelement, insbesondere einer Deckwand, hergestellt werden, wobei nach der Formgebung in dieses Abdeckelement zumindest in diskreten Bereichen, in denen ein Eingriff eines Schließmittels, wie z.B. eines Schließzapfens eines Beschlages eines Fensterflügels, vorgesehen ist eine Vertiefung eingebracht wird.

Dabei ist es von Vorteil, wenn diese Vertiefung als Durchbruch ausgeführt wird, da damit ein tieferer Eingriff des Schließzapfens und damit ein sicherer Halt in dem Schließelement ermöglicht wird.

Die Kammer in der das zumindest eine Schließelement aufgenommen wird, kann mit einem bereits erwähnten verschwenkbar angeordneten Abdeckelement, insbesondere einer Deckwand, hergestellt werden, sodass nicht nur das bereits während dem Herstellverfahren eingebrachte Schließelement von Außen besser zugänglich ist, sondern darüber hinaus es unter Umständen noch möglich ist, zusätzliche Schließelemente nachträglich einzubauen.

Es ist dabei von Vorteil wenn in einem Übergangsbereich zwischen dem Abdeckelement und einer weiteren Wandung des Profils eine, in Richtung einer Längserstreckung des Profils verlaufende, rillen- bzw. nutartige Vertiefung, insbesondere in Art eines Filmscharniers, ausgebildet wird, sodass keine zusätzlichen Maßnahmen für die Verschwenkbarkeit getroffen werden müssen und dieses fix mit dem restlichen Profilteil verbunden ist.

Weiters kann das Abdeckelement mit zumindest einer Seitenwand hergestellt werden, die zumindest einen Teil einer Seitenwand der Kammer überdeckt bzw. ersetzt, sodass also die Kammer durch die Verschwenkung des Abdeckelementes noch besser zugänglich ist bzw. kann damit gegebenenfalls ein im Sichtbereich des Profils liegender Stoss zwischen dem Abdeckelement und der zumindest einen Seitenwand derart platziert werden, dass dieser von außen nicht sichtbar ist.

Gemäß einer Ausführungsvariante des Profils ist vorgesehen, dass das zumindest eine Schließelement sich zumindest annähernd über die Gesamtlänge des Profilkörpers erstreckt, wodurch nicht nur eine Aussteifung des Profils, beispielsweise wenn dieses aus Kunststoff, insbesondere als Hohlkammerprofil, ausgeführt ist, erreicht werden kann, sondern es damit auch möglich ist, die mit dem Schließelement in Eingriff zu bringenden Schließmittel am zum Profil korrespondierenden Flügelprofil an beliebiger Stelle zu platzieren.

Im Gegensatz dazu ist es aber auch möglich, dass das zumindest eine Schließelement in diskreten Bereichen im Profil angeordnet ist, in denen ein Eingriff eines Schließmittels, wie z.B. eines Schließzapfens eines Fensterflügels, vorgesehen ist, um damit einerseits Materialkosten einzusparen und andererseits die erforderlichen Metallteile auf ein Minimum zu reduzieren und damit eine entsprechende Gewichtsreduktion des Profils zu erreichen.

Es ist auch möglich, dass das zumindest eine Schließelement zumindest eine Seitenwand und/oder eine Deckwand des Profils zumindest teilweise umschließt, wodurch eine weitere Verstärkung des Profils bzw. des Profilkörpers erreicht werden kann.

Wie bereits erwähnt, kann das Abdeckelement die Kammer zumindest annähernd über die Gesamtlänge des Profils abdecken, sodass diese Kammer und das darin angeordnete Schließelement weitestgehend vor äußeren Umwelteinflüssen geschützt ist.

Das Schließelement kann zumindest einen flügelartigen Fortsatz aufweisen, der in dem Profilkörper verankert ist, wobei gemäß einer Ausführungsvariante vorgesehen sein kann, dass dieser flügelartiger Fortsatz zumindest einen Durchbruch aufweist, wodurch die Ausreißfestigkeit des Schließelementes verbessert werden kann, insbesondere wenn dieser Durchbruch mit dem Profilwerkstoff ausgefüllt ist.

Der Profilkörper kann als Blendrahmenprofil ausgebildet sein, wobei nach einer Ausführungsvariante das Schließelement als Schließblech ausgebildet sein kann. Andererseits ist es möglich dass der Profilkörper als Fenster- oder Türflügelrahmenprofil ausgebildet ist wobei wiederum nach einer Ausführungsvariante das Schließelement als Dreh-, Dreh-Kipp-, Kipp- oder Schwing-Beschlag ausgebildet sein kann. Das erfindungsgemäße Profil ist also, je nach Ausgestaltung des Profils selbst, universell im Fenster- bzw. Türbereich einsetzbar.

Das Schließelement kann einen c-, u-, doppel-T-, doppel-C- förmigen oder zumindest annähernd runden, insbesondere kreisausschnittförmigen oder elliptischen Querschnitt aufweisen, wodurch einerseits die Haltekraft eines darin eingreifenden Schließmittels reguliert werden kann und andererseits auch, insbesondere bei der doppel-t-förmigen Querschnittsausbildung, die Halterung bzw. Haftung des Schließelements am Profilkörper selbst verbessert werden kann.

Es ist weiters möglich, dass zwei oder mehrere Schließelemente angeordnet sind, wobei diese nach einer Ausführungsvariante dazu mit gegengleicher Bewegungsrichtung zueinander angeordnet sein können, wodurch wiederum die Schließkraft und die Einbruchssicherheit verbessert werden können.

Es ist auch von Vorteil, wenn das Schließelement mit zumindest einem Dichtelement versehen ist, wobei dieses Dichtelement einerseits als Wärmedichtelement, andererseits als Dichtelement gegen Feuchtigkeit ausgebildet sein kann, sodass, insbesondere bei teilweise außen liegendem Schließelement, eine entsprechende Dichtfläche gegen ein, an das Profil mit dem Schießelement anschlagendes, weiteres Profil vorhanden ist.

Von Vorteil ist auch wenn das Schließelement als Verstärkungselement für den Profilkörper ausgebildet ist, da damit auf ein zusätzliches Bauteil für das Profil verzichtet werden und der Herstellungsprozess selbst verkürzt bzw. vereinfacht werden kann. Andererseits ist es damit möglich, dem Profilkörper eine zusätzliche Verstärkung zu geben und/oder eine verbesserte Möglichkeit zur Verschraubung bei Dübelmontage zu erhalten.

Weiters kann gemäß einer Ausführungsvariante der Erfindung vorgesehen sein, dass das Schließelement eine Rasteinrichtung für das Schließmittel aufweist, wodurch die Verschlusswirkung verbessert werden kann.

Das Schließelement kann an einer der Bodenwand bzw. den Seitenwänden zugekehrten Wandung zumindest eine Ausnehmung bzw. zumindest einen Durchbruch aufweisen. Es kann damit erreicht werden, dass während des Formgebungsprozesses der zähplastische Profilwerkstoff in diese Ausnehmung bzw. Durchbruch einläuft und wird damit die Ausreißfestigkeit des Schließelementes weiters erhöht.

Diese Ausnehmung kann dabei nutartig sein bzw. kann diese nutartige Ausnehmung zumindest eine Hinterschneidung aufweisen, wodurch eine Art Verhakungseffekt bezüglich der Ausreißfestigkeit erreicht wird. Dies wird ebenso erreicht, wenn die Ausnehmung einen schwalbenschwanzförmigen Querschnitt aufweist.

Es ist auch möglich, das Schließelement mehrteilig auszuführen, wobei nach einer weiteren Ausführungsvariante vorgesehen sein kann, dass zumindest einzelne Teile des Schließelementes höhen- und/oder seitlich verstellbar ausgebildet sind. Dadurch kann nicht nur eine einfache Justierung und damit eine entsprechend einfache Einstellung bzw. Nachjustierung des Schließelementes vor Ort erfolgen, sondern ist damit auch der Anpressdruck des Schließelementes an ein entsprechendes weiteres Schließmittel, welches mit dem Schließelement zusammenwirkt, einstellbar, insbesondere anpassbar.

Nach einer Weiterbildung ist vorgesehen, dass mehrere Schließelemente im Profil angeordnet sind und diese über einen gemeinsamen Verstellmechanismus miteinander wirkungsverbunden sind, wodurch die Handhabung entsprechend vereinfacht werden kann.

Zumindest ein Teil des mehrteiligen Schließelementes kann auch in einem weiteren Profilelement, z.B. einem Flügelrahmen, angeordnet sein.

Es ist aber auch möglich, dass das Schließelement zumindest großteils im Profilwerkstoff verdeckt angeordnet ist, sodass dieses weitestgehend vor äußeren Einflüssen geschützt ist. Es wird damit aber auch möglich, ein Profil zu Verfügung zu stellen, bei dem die über die Profiloberfläche vorstehenden Teile auf ein Mindestmaß reduziert sind.

Zum besseren Verständnis der Erfindung wird diese anhand der nachfolgenden Figuren näher erläutert.

Es zeigen jeweils in stark schematisch vereinfachter Darstellung.
- Fig. 1: eine erste Ausführungsvariante eines Profils mit einem, in eine offene Kammer eingelegten Schließelement;
- Fig. 2: ein Profil mit einem Schließelement in einer zumindest teilweise verschlossenen Kammer;
- Fig. 3: ein Profil mit einem Schließelement für einen seitlichen Eingriff;
- Fig. 4: ein Profil mit einem Schließelement mit zumindest annähernd doppel-T-förmigem Querschnitt;
- Fig. 5: ein Profil mit einem Schließelement, das eine Öffnung der Kammer zumindest teilweise umgreift;
- Fig. 6: ein Profil mit einem Schließelement in einer, mit einem Abdeckelement versehenen Kammer;
- Fig. 7: ein Profil bei dem das Abdeckelement für die Kammer des Schließelementes zumindest teilweise eine Seitenwand der Kammer ausbildet;
- Fig. 8: ein Profil mit einem, im Profilwerkstoff verankerten Schließelement;
- Fig. 9: ein Profil mit einem Schließelement mit nach außen ragendem Schließbolzen;
- Fig. 10: ein Profil mit vertikal angeordnetem Schließelement;
- Fig. 11: ein Profil mit im Querschnitt betrachtet L-förmigem Schließelement;
- Fig. 12: ein Profil mit zwei Schließelementen;
- Fig. 13: ein Profil mit höhenverstellbarem Schließelement;

- Fig. 14: einen Ausschnitt aus einem Profil mit im Querschnitt betrachtet rundem Schließelement;
- Fig. 15: eine Ausführungsvariante des Schließelementes nach Fig. 14;
- Fig. 16: eine weitere Ausführungsvariante zum Schließelement nach Fig. 14.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Vorab sein angemerkt, dass, obwohl in den Fig. Schnittdarstellungen gezeigt werden, lediglich das Schließelement zur besseren Übersichtlichkeit schraffiert dargestellt wird.

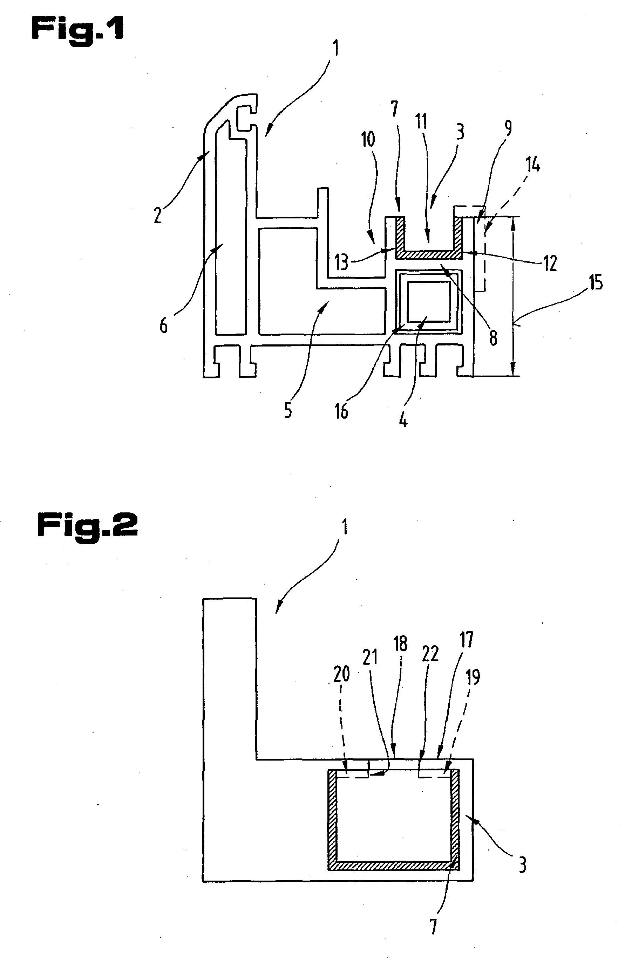

In Fig. 1 ist ein Profil 1 für ein Fenster oder eine Tür dargestellt. Dieses weist einen Profilkörper 2 aus einem im zähplastischen bzw. schmelzflüssigen Zustand verformbaren Profilwerkstoff auf. Beispielsweise ist es möglich, dass der Profilkörper 2 aus einem Kunststoff, wie z.B. PVC, Polypropylen, oder einem dieser Art verformbaren Holzwerkstoff gebildet ist. Prinzipiell können sämtliche, im Bereich der Fensterbranche üblicherweise verwendeten Materialien, wie z.B. auch Holz an sich bzw. auch Metalle sowie Kombinationen aus den genannten Werkstoffen verwendet werden. Auch Profilkörper 2 aus Composits und faserverstärkten Werkstoffen sind einsetzbar.

In dem Profilkörper 2 nach Fig.1 sind mehrere Kammern 3 bis 6 ausgeformt, wobei jedoch gemäß der Erfindung lediglich eine Kammer 3 für ein Schließelement 7 vorhanden sein muss. Das Profil 1 nach Fig. 1 ist somit als so genanntes Hohlkammerprofil ausgebildet.

Die zumindest eine Kammer 3 wird durch eine Bodenwand 8 sowie zumindest zwei Seitenwände 9, 10 begrenzt, wobei diese Kammer 3 bei dieser Ausführungsvariante nach oben hin offen ausgeführt ist. Selbstverständlich können auch mehrere Seitenwände für die Kammer 3 vorgesehen werden, insbesondere wenn sich die Kammer 3 nicht über die Gesamtlänge des Profils erstreckt, sodass also weitere senkrecht auf die Seitenwände 9, 10 stehende Seitenwände vorhanden sein können. In diesem Fall ist es selbstverständlich möglich mehrere Kammern 3 hintereinander bei Bedarf anzuordnen.

Da derartige Hohlkammerprofile bereits allgemeiner Stand der Technik und vielfach beschrieben sind, sei der Fachmann zur Vermeidung unnötiger Wiederholungen an dieser Stelle an die einschlägige Literatur verwiesen. Die Art und Lage der Kammern richtet sich dabei vor allem nach der zu erzielenden Steifigkeit des Profils bzw. nach der gewünschten Wärmedämmung. Für letztere Funktion, kann in zumindest einer der weiteren Kammern 4 - 6 ein Dämmelement, z.B. ein Schaumstoff, vorgesehen werden, das vorteilhafterweise während des Formgebungsprozesses des Profils 1 in der Kammer 4 - 6 vor Ort erzeugt wird.

Das Schließelement 7 ist bei der Ausführungsvariante nach Fig. 1 mit einem u-förmigen Querschnitt ausgebildet, und liegt direkt an der Bodenwand 8, sowie an den beiden Seitenwänden 9, 10 mit einer Schließelementbodenwand 11, sowie den beiden Schließelementseitenwänden 12, 13 formschlüssig an, sodass also dazwischen kein zusätzlicher Hohlraum ausgebildet wird. Dadurch können sich zwischen der Bodenwand 9 und der Schließelementbodenwand 11 bzw. den Seitenwänden 9, 10 und den Schließelementseitenwänden 12, 13 adhäsive Kräfte ausbilden, sodass dieses Schließelement 7 zumindest bereichsweise mit dieser Bodenwand 8 bzw. den Seitenwänden 9,10 "verbunden" ist, wodurch sich ein fester Halt des Schließelementes 7 in der Kammer 3 ergibt. Dadurch ist es nicht mehr notwendig, dieses Schließelement 7 mit der Kammer 3, d.h. zumindest der Bodenwand 8 bzw. den Seitenwänden 9, 10 über andere zusätzliche Verbindungsmitteln, wie z.B. Schrauben, Nieten oder dergleichen, zu verbinden, wie dies aus dem Stand der Technik bekannt ist, wenngleich dies selbstverständlich möglich ist.

Die Schließelementseitenwände 12, 13 können in ihrer Höhe so bemessen sein, dass sie bündig mit den Seitenwänden 9, 10, wie dies in Fig. 1 dargestellt ist, abschließen. Das Schließelement 7 ist somit von Außen her sichtbar. Andererseits ist es möglich, dass das Schließelement 7 mit Schließelementseitenwänden 12, 13 zu versehen, die eine geringere Höhe aufweisen als die Seitenwände 9, 10 der Kammer 3. In diesem Fall besteht die Möglichkeit, das die Seitenwände 9, 10 aufeinander zugerichtete Fortsätze aufweisen und so einen zumindest annähernd c-förmigen Querschnitt der Kammer 3 ausbilden, um damit die Schließelementseitenwände 12, 13 von oben her gesehen zu überdecken, wodurch die Halterung des Schließelementes 7 in der Kammer 3 weiter verbessert werden kann.

Im Gegensatz dazu, besteht aber auch die Möglichkeit, wie dies in Fig. 1 strichliert dargestellt ist, an dem Schließelement 7, d.h. zumindest einer der Schließelementseitenwände 12, 13 einen im Querschnitt gesehen L-förmigen Schließelementschenkel 14 vorzusehen, der zumindest annähernd teilweise parallel zur Schließelementseitenwand 13 verläuft, um damit die Seitenwand 9 zu umgreifen, sodass also das Schließelement 7 in diesem Bereich von außen her sichtbar ist. Zum einen wird damit die Fläche, über die das Schließelement 7 am Profilkörper 2 anhaftet, vergrößert, sodass also die Halterung des Schließelementes 7 im Profilkörper 2, d.h. der Kammer 3 wiederum verbessert ist, zum anderen ist es damit möglich, insbesondere wenn das Schließelement 7 aus einem metallischen Werkstoff, wie z.B. einer Kupferlegierung insbesondere Messing, gefertigt ist, den Profilkörper 2 mit einer Anschlagfläche, z.B. für ein weiteres Profil zu versehen, beispielsweise wenn das Profil 1 als Blendrahmenprofil ausgebildet ist, für ein Fensterflügelprofil oder ein Türflügelprofil, sodass der Profilkörper 2 in diesem Bereich vor Beschädigungen durch Schläge etc. geschützt ist. Es ist damit auch möglich, dem Profilkörper 2 bewusst in diesem Bereich ein anderes Aussehen zu geben, beispielsweise eine bestimmte Färbigkeit bei Verwendung entsprechender Schließelement 7. Dieser in Fig. 1 dargestellte Schließelementschenkel 14 kann sich beispielsweise über die Höhe der Seitenwand 9 der Kammer 3 erstrecken, ebenso ist es möglich, dass sich dieser Schließelementschenkel 14 über eine Gesamthöhe 15 des Profilkörpers 2 in diesem Bereich erstreckt.

Neben der fakultativen Anordnung des Schließelementschenkels 14 zur Erhöhung der Stabilität des Profilkörpers 2, kann das Schließelement 7 selbst ein Versteifungselement für den Profilkörper 2 ausbilden, insbesondere wenn dieses Schließelement 7 sich zumindest annähernd über die Gesamtlänge des Profilkörpers 2 erstreckt. Mit zumindest annähernd ist gemeint, dass sich das Schließelement 7 bevorzugt nicht bis in die Randbereiche, also die Stirnseiten des Profilkörpers 2, erstreckt, da üblicherweise derartige Profile 1 im Eckbereich, in dem zwei Profile 1 aneinanderstoßen, auf Gehrung geschnitten und miteinander verschweißt werden. Es soll damit die Ausbildung einer fehlerhaften Schweißnaht verhindert bzw. das Ablängen des Profils 1 vereinfacht werden.

Obwohl unter Umständen die Versteifung des Profils 1 mit dem Schließelement 7 ausreichend ist, ist es selbstverständlich möglich, wie dies andeutungsweise in Fig. 1 unterhalb des Schließelementes 7 dargestellt ist, weitere Versteifungselemente 16 im Profilkörper 2, d.h. in zumindest einer der Kammern 4 bis 6 vorzusehen, gegebenenfalls ist es sogar möglich, dass das Schließelement 7 in seiner Höhe derart bemessen wird, dass es sich zumindest annähernd über die oben angesprochene Gesamthöhe 15 in diesem Bereich erstreckt.

Das Schließelement 7 kann beispielsweise für den Eingriff eines Schließzapfens, bzw. generell eines weitem Schließmittels eines Fensterflügels oder eines Türflügels vorgesehen sein.

Selbstverständlich ist auch möglich, dass jeweils ein Schließelementschenkel 14 an jeweils einer Schließelementseitenwand 12, 13 vorgesehen ist, also das beispielsweise beide Seitenwände 9 und 10 der Kammer 3 vom Schließelement 7 umgriffen werden.

Neben der Ausgestaltung, dass das Schließelement 7 sich über die Gesamtlänge des Profils 1 erstreckt, ist es alternativ dazu möglich, dieses Schließelement 7 bzw. mehrere Schließelemente 7 in diskreten Bereichen des Profilkörpers 2 vorzusehen, vorzugsweise sind diese Schließelement 7, in Längsrichtung des Profils 1 gesehen, hintereinander angeordnet. Diese diskreten Bereiche werden dabei an die Lage weiterer Schließmittel, wie z.B. Schließzapfen von Fensterflügeln, beispielsweise von Dreh-Kipp-Beschlägen, in ihrer Platzierung am Profilkörper 2 angepasst.

In Fig. 2 ist die Ausführungsvariante des Profils1 mit lediglich einer Kammer 3 gezeigt. In dieser Kammer 3 ist wiederum das Schließelement 7 angeordnet. Zum Unterschied zur Ausführungsvariante des Profils 1 nach Fig. 1, ist bei dieser Ausführungsvariante die Kammer 3 geschlossen ausgeführt, also mit einem Abdeckelement 17 in Form einer Deckwand der Kammer 3 versehen. Diese Deckwand ist zumindest bereichsweise mit einem Durchbruch 18 versehen, insbesondere einem Langloch, um damit wiederum das Eingreifen eines weiteren Schließmittels, wie beispielsweise die bereits angesprochenen Schließzapfen, zu ermöglichen. Dabei kann dieser Durchbruch 18 sich auch über die Gesamtlänge des Profils 1 bedarfsweise erstrecken, um somit das Profil 1 mit einer größeren Variabilität bezüglich der Platzierung der weiteren Schließmittel auszustatten.

Auch bei dieser Ausführungsvariante ist das Schließelement 7 mit einem u-förmigen Querschnitt ausgestattet. Strichliert ist jedoch angedeutet, dass dieser Querschnitt zumindest annähernd c-förmig sein kann und beispielsweise sich bis zumindest annähernd in den Bereich des Durchbruches 18 sich erstrecken kann, wobei die beiden oberen waagrechten, strichliert dargestellten Schenkel 19, 20 bündig mit Stirnflächen 21, 22, welche den Durchbruch 18 seitlich begrenzen, abschließen.

Des weiteren besteht auch bei dieser, wie bei sämtlichen weiteren Varianten der Erfindung, einerseits die Möglichkeit mehrere Kammern 4 bis 6 im Profil 1 auszubilden, bzw. das Schließelement 7 sich einerseits zumindest annähernd über die Gesamtlänge des Profils 1 sich erstrecken zu lassen bzw. nur in diskreten Bereichen, über die gesamte Länge des Profils 1 gesehen, in der Kammer 3 anzuordnen, wobei auch die Kammern 3 selbstverständlich nur auf diskrete Bereiche aufgeteilt, im Profilkörper 2 ausgebildet werden können.

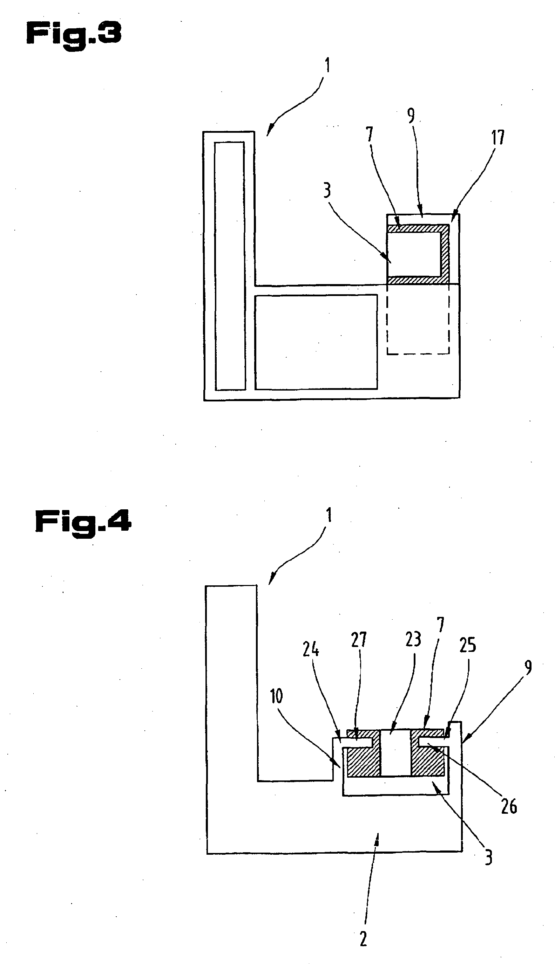

Die Ausführungsvariante des Profils 1 nach Fig. 3 zeigt wiederum das Schließelement 7 in der Kammer 3. Zum Unterschied zu voran stehenden Ausführungsvarianten, ist dieses Schließelement 7 allerdings um 90° gedreht, ebenso wie die Kammer 3, sodass damit ein seitlicher Eingriff eines weiteren Schließmittels in diese Kammer 3, d.h. in das Schließelement 7, ermöglicht wird. Dabei kann sich das Schließelement 7, beispielsweise um wiederum eine Versteifung des Profils 1 zu bewirken, auch bis in die darunter liegenden Bereiche des Profilkörpers 2 erstrecken, wie dies in der Fig. 3 strichliert dargestellt ist. Sämtliche weiteren Alternativen, die bereits zu Fig. 1 beschrieben wurden, wie beispielsweise die Anordnung eines L-förmigen Schließelementschenkels 14, etc. um damit eine Seitenwand 9, die in diesem Fall als Abdeckelement 17 aufgrund der Verdrehung der Kammer 3, zum umgreifen, sind auch bei dieser, sowie bei sämtlichen anderen beschriebenen Varianten der Erfindung möglich.

Es sei an dieser Stelle angemerkt, dass, obwohl in der Beschreibung einige bevorzugte Varianten der Querschnittsform des Schließelementes 7 dargestellt werden, dieses selbstverständlich im Rahmen der Erfinddung eine beliebige Querschnittsform aufweisen kann. So ist es z.B. auch möglich, dass Schließelement 7 mit einem runden oder elliptischen Querschnitt auszubilden, wie dies weiter unten noch näher dargestellt wird. Ebenso ist es möglich, dass mehr als ein Schließelement 7, z.B. zwei, angeordnet werden, wobei diese eine zueinander gegenläufige Bewegung während des Schließens ausführen können.

Das Schließelement 7 in dem Profil 1 nach Fig. 4, ist im Querschnitt betrachtet, zumindest bereichsweise mit einem doppel-T-förmigen Querschnitt ausgebildet. In diesem Schließelement 7 kann zumindest eine Vertiefung 23, die gegebenenfalls als Durchbruch ausgeführt ist, vorgesehen sein, um damit das Eingreifen eines Schließmittels zu ermöglichen. Die Seitenwände 9, 10 der Kammer 3 des Profilkörpers 2 sind mit zumindest annähernd waagrecht angeordneten, aufeinander zuweisenden Fortsätzen 24, 25 ausgestattet. Nutartige Vertiefung 26, 27 in Längserstreckung des Schließelementes 7, durch welche der doppel-T-förmige Querschnitt des Schließelementes 7 ausgebildet wird, ist dabei so bemessen, dass die Fortsätze 24, 25 in diese Vertiefungen 26, 27 eingreifen, also das Schließelement 7 diese Fortsätze 24, 25 zumindest teilweise umschließt, sodass ein Teil des Schließelementes 7 von Außen sichtbar ist. Selbstverständlich können diese Fortsätze 24, 25 der Seitenwände 9, 10 auch innerhalb einer geschlossenen Kammer 3 ausgebildet sein, um damit die Sichtbarkeit, insbesondere wenn die Kammer 3 mit einem Abdeckelement 17 (in Fig. 4 nicht dargestellt) versehen ist, zu vermeiden. Durch dieses beidseitige Umschließen der Fortsätze 24, 25 kann eine verbesserte Halterung des Schließelementes 7 in der Kammer 3 erzielt werden, darüber hinaus wird damit auch eine entsprechende Versteifung des Profilkörpers 2, zumindest in diesem Bereich, erreicht.

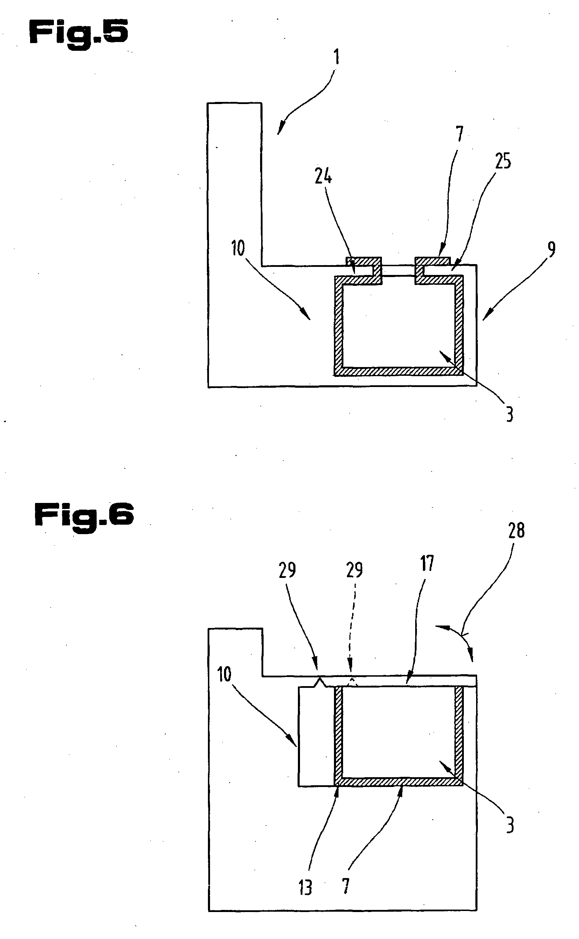

Das Schließelement 7 nach der Ausführungsvariante des Profils 1 gemäß Fig. 5 besteht, im Querschnitt betrachtet, aus einer Kombination der Schließelemente 7 nach Fig. 1 und 4, also einer Kombination eines u-förmigen und eines doppel-T-förmigen Querschnittes. Es können damit wiederum die Fortsätze 24, 25 der Seitenwände 9, 10 der Kammer 3 umschlossen werden, um damit einen besseren Halt des Schließelementes 7 in der Kammer 3 zu erreichen. Zudem ist damit eine Versteifung des Profils 1 erzielbar, insbesondere wenn sich das Schließelement 7 zumindest großteils über die Höhe des Profils 1 in diesem Bereich, indem das Schließelement 7 angeordnet ist, erstreckt, wie dies in Fig. 5 andeutungsweise dargestellt ist.

In Fig. 6 ist eine Ausführungsvariante gezeigt, bei der die Kammer 3 wiederum mit dem Abdeckelement 17 verschlossen ist. Das besondere bei dieser Ausführungsvariante ist, dass diese Abdeckelement 17 gemäß Doppelpfeil 28 verschwenkbar an der Seitenwand 10 der Kammer 3 angelenkt ist. Diese verschwenkbare Anlenkung kann dabei so bewirkt werden, dass im Abdeckelement 17 eine Materialschwächung 29, beispielsweise in Form einer Rille bzw. Nut insbesondere mit dreieckigem Querschnitt, wie z.B. in Art eines Filmscharnieres, ausgeformt ist. Dabei kann diese Materialschwächung einerseits, wie dies in vollen Linien in Fig. 6 dargestellt ist, neben dem Schließelement 7 liegen, sodass zwischen der Seitenwand 10 und der Schließelementseitenwand 13 ein Abstand entsteht, also die Kammer 3 im Querschnitt betrachtet, größer ist als der Querschnitt des Schließelementes 7, bzw. ist es ebenso möglich, dass, wie dies in Fig. 6 strichliert dargestellt ist, diese Materialschwächung 29 oberhalb des Schließelementes 7 angeordnet wird.

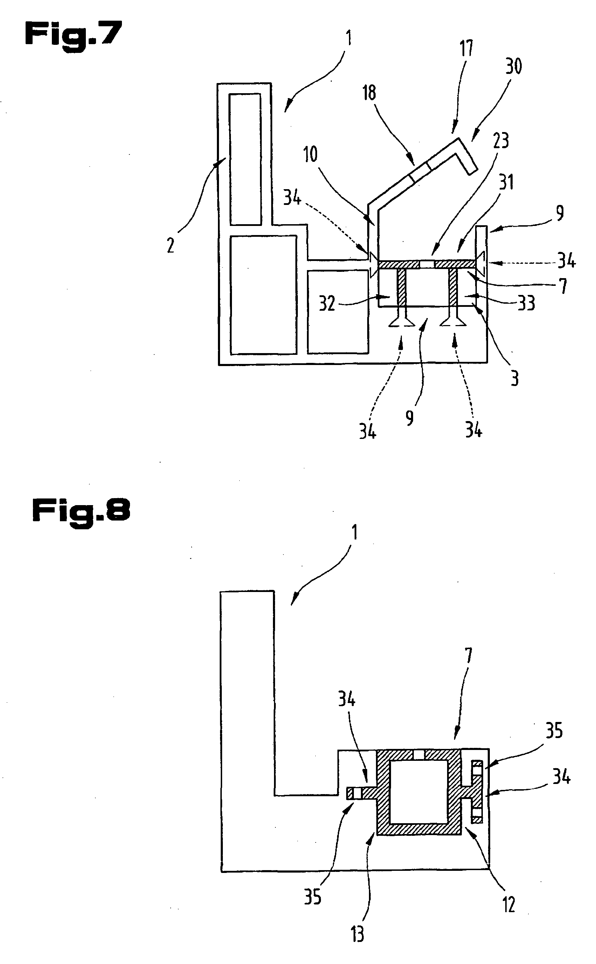

Bei der Ausführungsvariante des Profils 1 nach Fig. 7, ist an dem Abdeckelement 17, welches beispielsweise wiederum in Art eines Filmscharnieres an der Seitenwand 10 der Kammer 3 angelenkt sein kann, ein senkrecht auf dieses Abdeckelement 17 und in Richtung auf die Seitenwand 9 der Kammer 3 im geschlossenen Zustand weisender Abdeckelementschenkel 30 vorgesehen. Dieser bildet, zumindest einen Teil der Seitenwand 9, sodass durch das Verschwenken des Abdeckelementes 17 und damit das Öffnen der Kammer 3, diese besser zugänglich wird, indem der Zugang nicht nur von oben her ermöglicht wird.

Das Schießelement 7 ist bei dieser Ausführungsvariante mit einer plattenförmigen Basis 31, in der die Vertiefung 23 in Form eines Durchbruches ausgebildet ist, versehen, an der zumindest ein, d.h. nach Fig. 7 zwei, in Richtung auf die Bodenwand 9 der Kammer 3 weisende und beispielsweise auf diesen aufstehenden Stege 32, 33 angeformt sind. Der Durchbruch liegt dabei im geschlossenen Zustand des Abdeckelementes 17 unterhalb des Durchbruches 18, beispielsweise des Langloches, im Abdeckelement 17.

Alternativ dazu kann vorgesehen sein, dass an den einander gegenüberliegenden Stirnseiten der Basis 31 und/oder an den, von der Basis abweisenden, Stirnseiten der Stege 32, 33 schwalbenschwanzförmige Fortsätze 34 vorgesehen sind, wie dies in Fig. 7 strichliert dargestellt ist, welche in den Profilwerkstoff des Profilkörpers 2 hinein ragen und von dem Material des Profilkörpers 2 umschlossen sind, um eine Art Verankerung des Schließelementes 7 im Profilkörperwerkstoff zu erreichen und damit die Ausreißfestigkeit bzw. Halterung des Schließelementes 7 im Profilkörper 2 zu verbessern.

Diese Fortsätze 34 des Schließelementes 7 können auch flügelartig, wie dies in Fig. 8 an der Schließelementseitenwand 13 dargestellt ist, oder t-förmig, wie dies in Fig. 8 an der Schließelementseitenwand 12 dargestellt ist, ausgebildet sein.

In einer weiteren Ausführungsvariante hierzu können diese Fortsätze 34 wiederum Durchbrüche 35, beispielsweise Bohrungen, aufweisen, um durch das Eindringen des Profilkörperwerkstoffes in diese Durchbrüche während der Herstellung des Profils 1, den Verankerungseffekt zu verstärken.

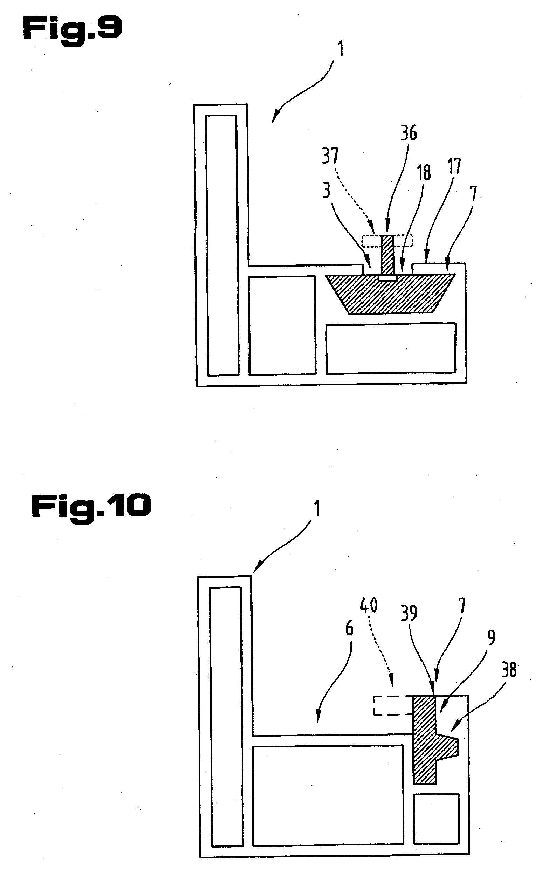

In einer weiteren Ausführungsvariante ist andeutungsweise dargestellt, dass das Schließelement 7 nicht nur profilartig, wie zu den Ausführungsbeispielen der Fig. 1 bis 8 beschrieben, ausgeführt sein kann, beispielsweise in Art eines Schließbleches, sondern dieses Schließelement 7 auch ein Beschlag, wie z.B. ein Dreh-Kipp-Beschlag, sein kann, sodass also das Profil 1 auch als Flügelprofil und nicht nur als Blendrahmenprofil für Fenster und Türen ausgebildet sein kann. Dieses Schließelement 7 nach Fig. 9 ist dabei großteils von dem Profilkörperwerkstoff umgeben, wobei im Abdeckelement 17, also der Deckwand der Kammer 3, der Durchbruch 18 vorgesehen ist, um das Hindurchragen eines Schließzapfens 36 und damit dessen Eingriff in ein Schließelement 7, beispielsweise in Form der Ausführungen nach den Fig. 1 bis 8, bei geschlossenem Fenster bzw. gekipptem Fenster zu ermöglichen.

Das Schließelement 7 kann insbesondere bei dieser Ausführungsvariante aber auch generell mehrteilig ausgeführt sein.

Es ist weiters möglich, dass das Schließelement 7 generell starr oder zumindest teilweise bzw. Teile davon beweglich ausgeführt sind. D.h. im letzteren Fall besteht die Möglichkeit das Schließelement 7 mit einem beweglichen Teil und einem starren Teil auszubilden. So ist es z.B. möglich über die bewegliche Ausführung eine Höhenverstellbarkeit, insbesondere des Schließzapfens 36, zu ermöglichen, um z.B. damit eine Anpassung an den Abstand zwischen Blendrahmen und Flügelrahmen, insbesondere während der Montage, zu ermöglichen. Gleichzeitig ist damit auch der Anpressdruck variierbar ausgestaltbar. Die Verstellbarkeit kann in horizontaler und/oder vertikaler Richtung ermöglicht werden.

Wie weiters in Fig. 9 dargestellt ist, besteht die Möglichkeit, dass am Schließzapfen 36 an dem nach außen ragenden Ende zumindest an einer Seite bzw. wie in Fig. 9 dargestellt, beidseitig, einen Schließzapfenschenkel 37 vorzusehen, um damit einen Eingriff in eine entsprechende Ausnehmung, beispielsweise eines Flügelprofils, und damit eine höhere Ausreißsicherheit bzw. Einbruchsicherheit zu erreichen oder aber um den Anpressdruck zu erhöhen. Der Schließzapfen 36 kann dabei derart ausgestaltet sein, dass dieser um seine Längsachse drehbar ist, um z.B. die Schließzapfenschenkel 37 in Eingriff mit angesprochener Ausnehmung zu bringen bzw. um das Öffnen des Flügelrahmens zu ermöglichen.

Das Ausführungsbeispiel nach Fig. 10 zeigt eine Variante, bei der das Schließelement 7 im Wesentlichen vertikal stehend im Profil 1 eingepasst ist. Mit im Wesentlichen ist gemeint, dass dieses Schließelement 7 im Querschnitt betrachtet eine größere vertikale als horizontale Erstreckung aufweist. Selbstverständlich ist es möglich, dass das Schließelement 7 breiter ausgeführt ist, also seine horizontale Erstreckung ― wiederum im Querschnitt betrachtet ― zumindest annähernd jenem Ausmaß der Vertikalerstreckung entspricht.

Das Schließelement 7 nach Fig. 10 weist einen zumindest annähernd horizontal ausgerichteten Fortsatz 38 auf, wobei der in Fig. 10 dargestellte trapezoide Querschnitt für diesen nur stellvertretend für andere Querschnittsformen ist, beispielsweise kann dieser Fortsatz 38 auch eine L-Form, eine doppel-T-Form oder dgl. aufweisen. Über diesen Fortsatz 38 wird dieses Schließelement 7 im Profilwerkstoff des Profils 1 besser verankert.

Das Schließelement 7 bildet bei dieser Ausführungsvariante zumindest einen Teil der Seitenwand der Kammer 6 und kann, wie in Fig. 10 dargestellt, auch einen unteren Abschluss 39 dieser Seitenwand 9 bilden. Es wird damit beispielsweise ein seitlicher Eingriff in dieses Schließelement 7 ermöglicht.

Wie strichliert in Fig. 10 dargestellt, kann das Schließelement 7 einen nach innen gerichteten Schenkel 40 aufweisen, also das Schließelement 7 zumindest annähernd mit einem L-förmigen Profilquerschnitt - abgesehen von dem Fortsatz 38 - ausgestattet sein, um damit die Aushebesicherheit eines eingreifenden Schließzapfens (in Fig. 10 nicht darstellt) zu erhöhen. Anstelle des Schließzapfens kann selbstverständlich jedes andere, beliebige Schließmittel, welches in Eingriff mit dem Schließelement 7 gebracht wird, verwendet werden.

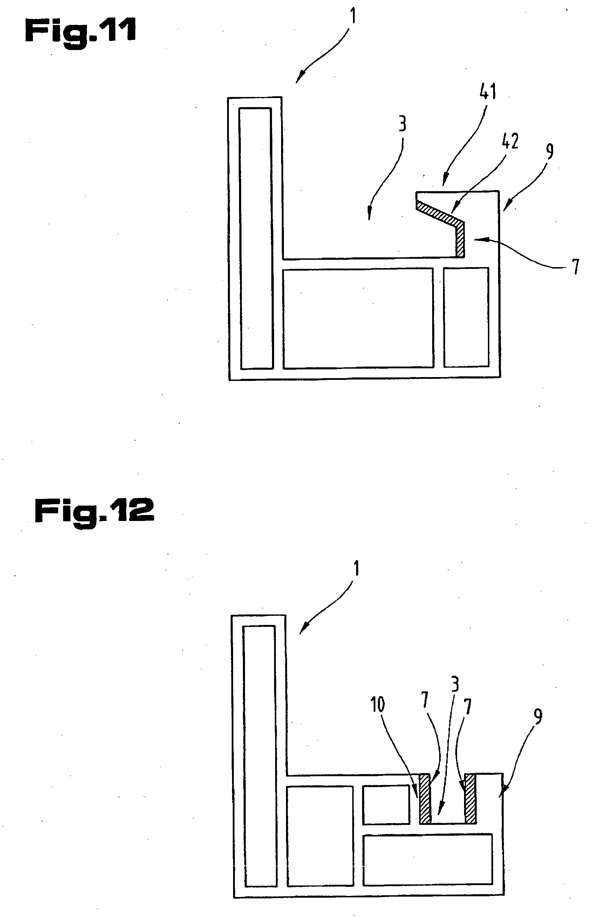

Bei der Ausführungsvariante nach Fig. 11 ist die Seitenwand 9 des Profils 1 im Querschnitt betrachtet zumindest annähernd L-förmig ausgebildet. Mit zumindest annähernd ist in diesem Fall gemeint, dass die Seitenwand 9 einen nach innen, d.h. in Richtung auf die Kammer 3 weisenden Wandschenkel 41 aufweist, der an seiner inneren, der Kammer 3 zugewandten Oberflächen einen schräg nach unten in Richtung von der offenen Seite der Kammer 3 auf den zumindest annähernd vertikal stehenden Teil der Seitenwand 9 verlaufenden Wandteil 42 aufweist. Bei dieser Ausführungsvariante der Erfindung wird die gesamte Oberfläche der Seitenwand 9, also sowohl des Wandteils 42 als auch des zumindest annähernd vertikal stehenden Wandteils der Seitenwand 9 von dem Schließelement 7 abgedeckt. Selbstverständlich ist es bei dieser Ausführungsvariante ebenso möglich, dass das Schließelement 7 nur einen Teil dieser Oberflächen bedeckt.

Durch den schrägen Verlauf wird ein einfacherer Eingriff eines weiteren Schließmittels in das Schließelement 7 ermöglicht, beispielsweise wenn dieses weitere Schließelement 7 aufgrund von z.B. Wärmespannungen bzw. Wärmeausdehnung nicht in seiner ursprünglich eingestellten Lage ist, sodass also das Schließmittel an diesem Wandteil 42, d.h. dem an diesem Wandteil 42 angeordneten Schließelementteil abgleiten kann. Auch bei dieser Ausführungsvariante bildet die zumindest annähernd L-förmig ausgebildete Form der Seitenwand 9 und des daran angeordneten Schließelementes 7, welches diese Form nachbildet, eine erhöhte Aushebesicherung, beispielsweise eines Fensterflügelrahmens, und kann damit die Einbruchsicherheit erhöht werden.

Nach der Ausführungsvariante nach Fig. 12 ist vorgesehen, dass zwei Schließelemente 7 in der Kammer 3 des Profils 1 angeordnet und zwar jeweils ein Schließelement 7 an jeweils einer Oberfläche der Seitewand 9 bzw. der Seitenwand 10 der Kammer 3. Wohl auch bei dieser Ausführungsvariante das Schließelement 7 sich über die gesamte Oberfläche erstreckend dargestellt ist, ist es ebenso möglich, dass sich zumindest eines der beiden Schließelemente 7 nur über einen Teil dieser Oberfläche erstrecken.

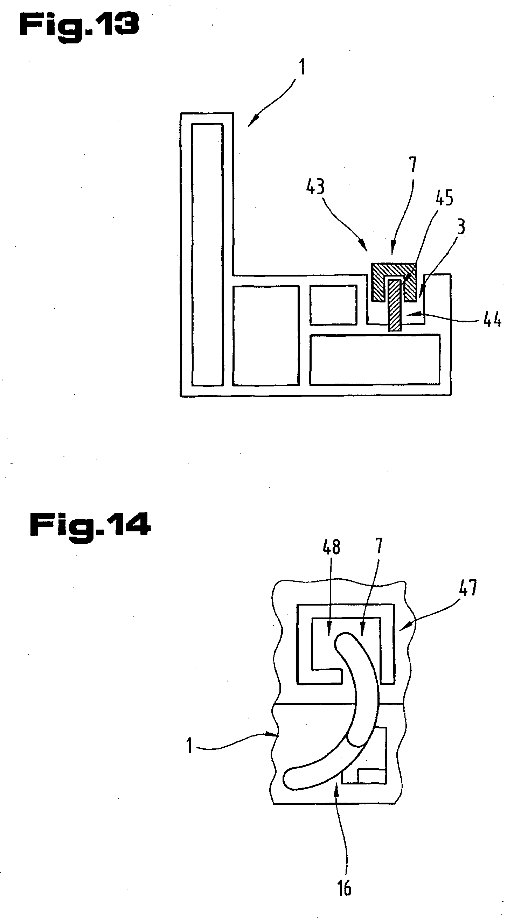

Nach Fig. 13 besteht das Schließelement 7, welches wiederum in der Kammer 3 des Profils 1 angeordnet ist, aus zwei Schließelementteilen 43, 44. Dabei wird der untere Schließelementteil 44 von dem oberen Schließelementteil 43 im oberen Bereich 45 des Schließelementteils 47, vorzugsweise beidseitig, umgriffen. Dazu weist der Schließelementteil 43 im Querschnitt betrachtet einen zumindest annähernd U-förmigen Querschnitt auf, während der Schließelementteil 44 im Querschnitt betrachtet zumindest annähernd stabförmig ausgebildet ist. Selbstverständlich ist es auch bei dieser Ausführungsvariante möglich, den unteren Schließelementteil 44 über entsprechende Fortsätze, in Fig. 13 nicht dargestellt, im Werkstoff des Profils 1 zu verankern, wie dies bereits weiter oben beschrieben wurde.

Durch die mehrteilige Ausführungsform des Schließelementes 7 ist auch bei dieser Ausführungsvariante eine Verstellbarkeit, insbesondere eine Höhenverstellbarkeit, erreichbar und kann damit wiederum auch der Anpressdruck variierbar einstellbar sein.

Gegebenenfalls kann die Kammer 3 durch den oberen Schließelementteil 43 dieser Ausführungsvariante zumindest großteils abgedeckt sein, sodass diese Kammer 3 vor Verschmutzung etc. geschützt ist.

Anstelle des U-förmigen Querschnittes des oberen Schließelementteils 43 ist bei dieser Ausführungsvariante auch ein C-förmiger Querschnitt oder dgl. denkbar.

Bei sämtlichen Ausführungsvarianten, nach denen eine Höhenverstellbarkeit bzw. eine Einstellbarkeit des Anpressdruckes erreicht wird, ist es möglich, sollten mehrere Schließelemente 7 im Profil 1 angeordnet sein, dass die einzelnen Teile dieser Schließelemente 7 über einen gemeinsamen Verstellmechanismus, der wiederum vorzugsweise im Profil 1 eingelassen ist, gleichzeitig miteinander verstellt werden.

Dieser Mechanismus kann beispielsweise in einer unter der Kammer 3 angeordneten, weiteren Kammer 4 angeordnet werden bzw. kann die Kammer 3 in ihrer Tiefe so bemessen werden, dass von dieser der Mechanismus aufgenommen werden kann.

Fig. 14 zeigt eine Ausführungsvariante der Erfindung, bei der das Schließelement 7 verdeckt ausgebildet ist. Dieses Schließelement 7 weist dabei einen zumindest annähernd runden bzw. elliptischen Querschnitt auf und ist im Profil 1 eine entsprechende Ausnehmung 46, welche den Querschnitt des Schließelementes 7 nachformt, zur Aufnahme des Schließelementes 7 im geöffneten Zustand des Fensters oder der Tür ausgeformt. Im entsprechenden Rahmenprofil des zu verschließenden Elementes, beispielsweise im Flügelrahmenprofil eines Fensters oder einer Tür, kann dazu ein entsprechender Schließelementteil 47 vorgesehen sein, der im wesentlichen einen U-förmigen Querschnitt aufweist, wobei an einem Schenkel des Schließelementteils mit dem U-förmigen Querschnitt ein in Richtung auf das Schließelement 7 gerichteter Schenkel angeordnet ist. Es wird damit im verschlossenen Zustand möglich, wie dies in Fig. 14 angedeutete ist, dass das Schließelement 7 in die durch den Querschnitt des Schließelementteils 47 gebildete Schließelementkammer 48 eingreift.

Auch der Schließelementteil 47 kann in ein entsprechendes Profil, d.h. in dessen Werkstoff, eingelassen, beispielsweise einextrudiert sein, sodass also keine, das Profil 1 an seiner Außenkontur überragenden Schließelementteile vorhanden sind und die Schließelemente 7 bzw. der Schließelementteil 47 weitestgehend verdeckt angeordnet sind.

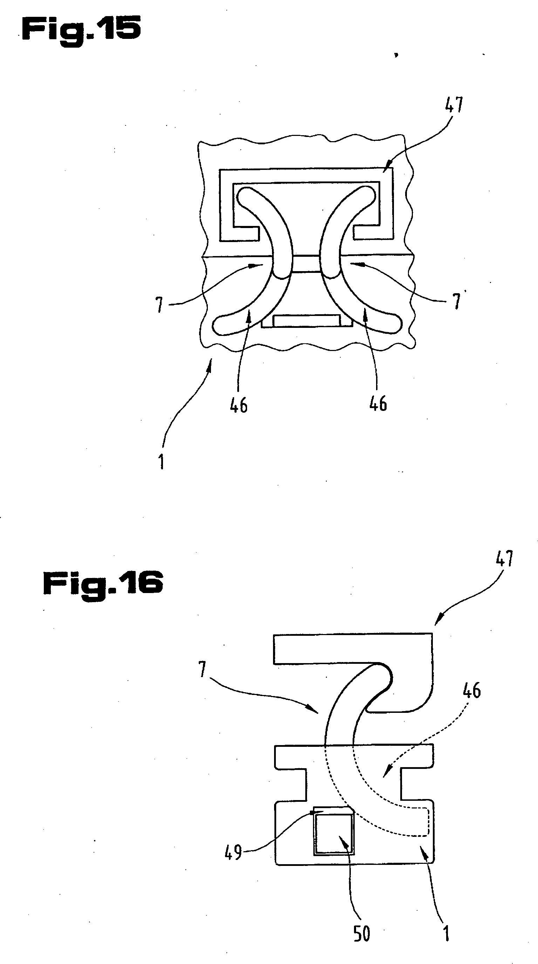

In einer Alternative hierzu besteht, wie Fig. 15 zeigt, die Möglichkeit, dass zwei derartige Schließelemente 7 wie sie in Fig. 14 dargestellt sind in entsprechenden Ausnehmungen 46 des Profils 1 angeordnet sind, wobei diese beiden Schließelemente 7 zueinander gegengleich angeordnet werden, also beispielsweise mit den konkaven oder konvexen Oberflächen zueinander. Der Schließelementteil 47 ist hierzu entsprechend ausgebildet und weist dem zufolge zwei aufeinander zuweisende Schenkel an dem U-förmigen Querschnitt des Schließelementteils 47 auf.

Wie Fig. 16 zeigt, ist es möglich, dass der Schließelementteil 47 auch hakenförmig ausgebildet sein kann und das Schließelement 7 in diesen Hacken eingreifen kann.

Zur Verstellung des Schließelementes 7 kann in einer entsprechenden Kammer 49 des Profils 1 ein entsprechender Verstellmechanismus 50 angeordnet werden, über den durch eine entsprechende Bewegung das Ausfahren bzw. Einfahren des Schließelementes 7 in die Ausnehmung 46 ermöglicht wird.

Obwohl nicht dargestellt, kann das Schließelement 7 zumindest ein Dichtelement aufweisen, welches beispielsweise einerseits als Wärmedämmung, andererseits aber auch als Dichtung zum Schutz vor eintretender Nässe ausgebildet sein kann. Insbesondere wenn das Schließelement 7 zumindest eine der Seitenwände 9, 10 der Kammer 3 umgreift, kann dieses Dichtelement auch als Anschlagdichtung für ein Fensterrahmen- oder Türrahmenprofil ausgebildet sein.

Weiters ist es möglich, dass im Schließmittel 7 Rasteinrichtungen vorgesehen sind, beispielsweise in Form von Nasen, etc., wie diese allgemein aus dem Stand der Technik für derartige Beschläge bekannt sind, um damit ein Verrasten eines weiteren Schließmittels mit dem Schließelement 7 zu ermöglichen und einen besseren Halt zu erreichen.

Neben den Durchbrüchen 35 in den Fortsätzen 34, beispielsweise den flügelartigen Fortsätzen 34 des Schließelementes 7, können derartige Durchbrüche auch in der Schließelementbodenwand 11 und/oder zumindest einer der Schließelementseitenwände 12, 13 vorgesehen sein, um wiederum das Einfließen des Profilwerkstoffes während der Herstellung des Profils 1 in diese Durchbrüche und damit eine zusätzliche Verankerung des Profils 1 im Profilkörper 2 zu erreichen. Dabei ist es gemäß einer Ausführungsvariante möglich, dass die Anzahl und die Größe dieser Durchbrüche 35 derart gewählt wird, dass das Schließelement 7 an der Bodenwand 8 und den Seitenwänden 9, 10 abweisenden Oberfläche vollständig mit dem Material des Profilkörperwerkstoffes bedeckt wird, also das Schließelement 7 großteils eingebettet in dem Profilkörper 2 ist.

Alternativ oder zusätzlich dazu, ist es möglich, im Schließelement 7 nutartige Ausnehmungen bzw. nutartige Hinterschneidungen, die gegebenenfalls einen schwalbenschwanzförmigen Querschnitt aufweisen, vorzusehen, um wiederum durch das Einfließen des Werkstoffes des Profilkörpers 2 während der Herstellung des Profils 1 in diese Ausnehmungen die Verankerung des Schließelementes 7 im Profilkörper 2 zu erhalten.

Das Schließelement 7 kann im Rahmen der Erfindung jede beliebige Form aufweisen, also z.B. jeder im Bereich von Fenstern bzw. Türen verwendeter Beschlag sein.

Unabhängig von den, im Folgenden beschriebenen, Herstellungsverfahren des Profils 1, stellt die Verschwenkbarkeit des Abdeckelementes 17, die gegebenenfalls über zusätzliche Schwenkmittel bzw. Beschläge, wie z.B. Scharniere, erreicht wird, oder aber auch durch eine Clipfunktion, indem dieses Abdeckelement in entsprechenden Ausnehmungen im Profilkörper 2 eingeclipst wird, eine eigenständige Lösung der gestellten Aufgabe dar, wobei dieses Abdeckelement 17 gegebenenfalls zumindest bereichsweise mit zumindest einem Durchbruch 18 versehen ist.

Bevorzugt wird das Profil 1 nach einem Verfahren hergestellt, bei dem der Profilwerkstoff, also z.B. der Kunststoff oder Holzwerkstoff, auf eine Temperatur erwärmt wird, bei dem der Werkstoff zumindest zähplastisch, beispielsweise schmelzflüssig ist, um diesen Werkstoff in einem Werkzeug die Form des Profilkörpers 2 zu geben. Dabei wird vor oder während der Formgebung das Schließelement 7 diesem Werkzeug zugeführt. Als Werkzeug kann beispielsweise eine Extrusionsdüse verwendet werden, sodass also das Profil 1 kontinuierlich hergestellt werden. Dazu ist es möglich, wenn sich das Schließelement 7 über die gesamte Länge des Profils 1 erstreckt, dieses Schließelement 7 zumindest annähernd linear der Extrusionsdüse aus Richtung des vor der Extrusionsdüse angeordneten Extruders und die Kunststoffschmelze beispielsweise in einem Winkel dazu zu zuführen. So ist es beispielsweise möglich, die Extrusionsdüse als Winkelkopfdüse auszubilden.

Alternativ dazu ist es möglich das Schließelement 7 in den noch zähen, plastischen Werkstoff nach Austritt des Profils 1 aus der Extrusionsdüse, beispielsweise einzudrücken oder auf andere Art in das Profil einzuführen.

Nach einer anderen Ausführungsvariante des Herstellungsverfahrens kann das Werkzeug als Spritzgussform ausgebildet sein. In diesem Fall kann das Schließelement 7 vor dem Einspritzen des Werkstoffes für das Profil 1 in dieses Werkzeug manuell oder automatisch eingelegt werden.

Vorzugsweise wird bei sämtlichen Varianten des Verfahrens, das Schließelement 7 beabstandet zu den Wandungen des Werkzeugs eingelegt, bzw. eingeführt und damit eine allseitige bzw. zumindest dreiseitige Umschließung des Schließelementes 7 zu ermöglichen.

Zur Verbesserung der Haftung des Schließelementes 7 an den Wandungen der Kammer 3, ist es möglich dieses Schließelement 7 zumindest teilweise oberflächlich mit einem Haftvermittler zu versehen. Vorzugsweise ist dieses Haftvermittler aus einem polymerisierbaren Material. Durch diese Maßnahme kann erreicht werden, dass die Polymerisation des Haftvermittlers während der Formgebung des Profils 1 stattfinden kann, wodurch gegebenenfalls Bindungen zwischen dem Material des Profilkörpers 2 und dem Haftvermittler ausgebildet werden und kann damit eine entsprechende Erhöhung der Haftfestigkeit erzielt werden.

Zur Herstellung der, im voranstehenden Text beschriebenen, Durchbrüche bzw. Vertiefungen, können Schneid- bzw. Fräswerkzeuge verwendet werden.

Die Ausführungsbeispiele zeigen mögliche Ausführungsvarianten des Profils 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mitumfasst.

Der Ordnung halber sei abschließend darauf hingewiesen, dass zum besseren Verständnis des Aufbaus des Profils 1 dieses bzw. dessen Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1; 2; 3; 4; 5; 6; 7; 8; 9; 10; 11; 12; 13; 14; 15; 16 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Profil
- 2: Profilkörper
- 3: Kammer
- 4: Kammer
- 5: Kammer

- 6: Kammer
- 7: Schließelement
- 8: Bodenwand
- 9: Seitenwand
- 10: Seitenwand

- 11: Schließelementbodenwand
- 12: Schließelementseitenwand
- 13: Schließelementseitenwand
- 14: Schließelementschenkel
- 15: Gesamthöhe

- 16: Versteifungselement
- 17: Abdeckelement
- 18: Durchbruch
- 19: Schenkel
- 20: Schenkel

- 21: Stimfläche
- 22: Stirnfläche
- 23: Vertiefung
- 24: Fortsatz
- 25: Fortsatz

- 26: Vertiefung
- 27: Vertiefung
- 28: Doppelpfeil
- 29: Materialschwächung
- 30: Abdeckelementschenkel

- 31: Basis
- 32: Steg
- 33: Steg
- 34: Fortsatz
- 35: Durchbruch

- 36: Schließzapfen
- 37: Schließzapfenschenkel
- 38: Fortsatz
- 39: Abschluss
- 40: Schenkel

- 41: Wandschenkel
- 42: Wandteil
- 43: Schließelementteil
- 44: Schließelementteil
- 45: Bereich

- 46: Ausnehmung
- 47: Schließelementteil
- 48: Schließelementkammer
- 49: Kammer
- 50: Verstellmechanismus

## Patentansprüche

1. Verfahren zur Herstellung eines extrudierten oder stranggepressten Hohlkammerprofils für ein Fenster oder eine Tür, insbesondere eines Blendrahmenprofils, eines Fensterflügelprofils, eines Türflügelprofils, in dem mehrere Kammern (3-6) ausgeformt sind, wobei in zumindest einer Kammer (3), die von einer Bodenwand (8) und zumindest einer Seitenwand (9) oder zumindest zwei Seitenwänden (9, 10) umgeben ist, zumindest ein, insbesondere profilartiges, Schließelement (7), zumindest teilweise formschlüssig aufgenommen ist, durch Erwärmen eines Profilwerkstoffes auf eine Temperatur, bei der der Profilwerkstoff zumindest zähplastisch ist und anschließende Formgebung des Hohlkammerprofils mit einem Werkzeug, **dadurch gekennzeichnet, dass** das Schließelement (7) als Dreh-, Dreh-Kipp-, Kipp- oder Schwing-Beschlag oder wie an sich bekannt zum Eingriff eines Schließmittels, wie z.B. eines Schließzapfens, ausgebildet ist, und dass das zumindest ein Schließelement (7) vor oder während der Formgebung dem Werkzeug zugeführt bzw. in das Werkzeug eingelegt wird und von dem Profilwerkstoff zumindest teilweise formschlüssig umschlossen wird.

2. Verfahren nach Anspruch 1, **dadurch gekennzeichnet, dass** das zumindest eine Schließelement (7) beabstandet zu einer Wandung des Werkzeuges eingelegt bzw. in dieses eingeführt wird.

3. Verfahren nach Anspruch 1 oder 2, **dadurch gekennzeichnet, dass** die Oberfläche des zumindest einen Schließelementes (7) zumindest teilweise mit einem Haftvermittler versehen wird.

4. Verfahren nach Anspruch 3, **dadurch gekennzeichnet, dass** ein Haftvermittler aus einem polymerisierbaren Material verwendet wird.

5. Verfahren nach einem der vorhergehenden Ansprüche, **dadurch gekennzeichnet, dass** ein Schließelement (7) verwendet wird, das zumindest eine Vertiefung (26) und/oder zumindest einen Durchbruch in der der Bodenwand (8) und/oder zumindest einer der Seitenwände (9, 10) zugekehrten Wandung des Schließelementes (7) aufweist.

6. Verfahren nach einem der vorhergehenden Ansprüche, **dadurch gekennzeichnet, dass** die Kammer (3), in der das zumindest eine Schließelement (7) aufgenommen wird, mit einem Abdeckelement (17), insbesondere einer Deckwand, hergestellt wird, in die nach der Formgebung des Hohlkammerprofils in diskreten Bereichen, in denen ein Eingriff eines Schließmittels, wie z.B. eines Schließzapfens eines Fensterflügels, vorgesehen ist, eine Vertiefung 23 eingebracht wird.

7. Verfahren nach Anspruch 6, **dadurch gekennzeichnet, dass** die Vertiefung (23) als Durchbruch ausgeführt wird.

8. Verfahren nach Anspruch 6 oder 7, **dadurch gekennzeichnet, dass** das, insbesondere an einer der Seitenwände (9, 10) angelenkte, Abdeckelement (17) verschwenkbar hergestellt wird.

9. Verfahren nach einem der Ansprüche 6 bis 8, **dadurch gekennzeichnet, dass** in einem Übergangsbereich zwischen dem Abdeckelement (17) und einer weiteren Wandung des Hohlkammerprofils eine, in Richtung in einer Längsersteckung des Hohlkammerprofils verlaufende, rillen- bzw. nutartige Vertiefung, insbesondere in Art eines Filmscharniers, ausgebildet wird.

10. Verfahren nach einem der Ansprüche 6 bis 9, **dadurch gekennzeichnet, dass** das Abdeckelement (17) mit zumindest einer Seitenwand hergestellt wird, die zumindest einen Teil zumindest einer Seitenwand (9, 10) des Hohlkammerprofils überdeckt bzw. ersetzt.

11. Durch Extrusion oder Strangpressen nach einem der Verfahren der Ansprüche 1-10 hergestelltes Hohlkammerprofil für ein Fenster oder eine Tür mit einem, eine Gesamtlänge aufweisenden Profilkörper (2) in dem mehrere Kammern (3-6) ausgeformt sind, wobei in zumindest einer Kammer (3), die von einer Bodenwand (8) und zumindest zwei Seitenwänden (9, 10) umgeben ist; zumindest ein, insbesondere profilartiges, Schließelement (7) zumindest teilweise formschlüssig aufgenommen ist, **dadurch gekennzeichnet, dass** das zumindest eine Schließelement (7) mit der Bodenwand (8) und/oder zumindest einer der Seitenwände (9, 10) formschlüssig verbunden ist.

12. Durch Extrusion oder Strangpressen nach einem der Verfahren der Ansprüche 1-10 hergestelltes Hohlkammerprofil für ein Fenster oder eine Tür mit einem, eine Gesamtlänge aufweisenden Profilkörper (2) in dem mehrere Kammern (3-6) ausgeformt sind, wobei in zumindest einer Kammer (3), die von einer Bodenwand (8), zumindest zwei Seitenwänden (9, 10) umgeben ist, zumindest ein, insbesondere profilartiges, Schließelement (7) zumindest teilweise aufgenommen ist, **dadurch gekennzeichnet, dass** die Kammer (3) weiters ein Abdeckelement (17), insbesondere eine Deckwand, aufweist und das Abdeckelement (17) verschwenkbar am Profilkörper (2) gehaltert ist.

13. Hohlkammerprofil nach Ansprüche 11 oder 12, **dadurch gekennzeichnet, dass** sich das zumindest eine Schließelement (7) zumindest annähernd über die Gesamtlänge des Profilkörpers (2) erstreckt.

14. Hohlkammerprofil nach einem der Ansprüche 11 bis 13, **dadurch gekennzeichnet, dass** das zumindest eine Schließelement (7) in diskreten Bereichen angeordnet ist, in denen ein Eingriff eines Schließmittels, wie z.B. eines Schließzapfens eines Fensterflügels, vorgesehen ist.

15. Hohlkammerprofil nach einem der Ansprüche 11 bis 14, **dadurch gekennzeichnet, dass** das zumindest eine Schließelement (7) zumindest eine Seitenwand (9, 10) und/oder eine Deckwand zumindest teilweise umschließt.

16. Hohlkammerprofil nach einem der Ansprüche 11 bis 15, **dadurch gekennzeichnet, dass** die Kammer (3) zumindest annähernd über die Gesamtlänge mit einem bzw. dem Abdeckelement (17) versehen ist.

17. Hohlkammerprofil nach einem der Ansprüche 11 bis 16, **dadurch gekennzeichnet, dass** das Abdeckelement (17) in diskreten Bereichen, in denen ein Eingriff eines Schließmittels, wie z.B. eines Schließzapfens eines Fensterflügels, vorgesehen ist, eine Vertiefung aufweist.

18. Hohlkammerprofil nach Anspruch 17, **dadurch gekennzeichnet, dass** die Vertiefung als Durchbruch (18) ausgebildet ist.

19. Hohlkammerprofil nach einem der Ansprüche 16 bis 18, **dadurch gekennzeichnet, dass** das Abdeckelement verschwenkbar an zumindest einer der Seitenwände (9, 10) der Kammer (3) angelenkt ist.

20. Hohlkammerprofil nach einem der Ansprüche 12 oder 16 bis 19, **dadurch gekennzeichnet, dass** das Abdeckelement (17) über ein Filmscharnier angelenkt ist.

21. Hohlkammerprofil nach einem der Ansprüche 12 oder 16 bis 20, **dadurch gekennzeichnet, dass** das Abdeckelement (17) zumindest einen Teil zumindest einer Seitenwand (9, 10) der Kammer (3) bildet.

22. Hohlkammerprofil nach einem der Ansprüche 11 bis 21, **dadurch gekennzeichnet, dass** das Schließelement (7) zumindest einen flügelartigen Fortsatz (34) aufweist, der in dem Profilkörper (2) verankert sind.

23. Hohlkammerprofil nach Anspruch 22, **dadurch gekennzeichnet, dass** der zumindest eine flügelartige Fortsatz (34) zumindest einen Durchbruch (35) aufweist.

24. Hohlkammerprofil nach einem der Ansprüche 11 bis 23, **dadurch gekennzeichnet, dass** der Profilkörper (2) als Blendrahmenprofil ausgebildet ist.

25. Hohlkammerprofil nach einem der Ansprüche 11 bis 24, **dadurch gekennzeichnet, dass** das Schließelement (17) als Schließblech ausgebildet ist.

26. Hohlkammerprofil nach einem der Ansprüche 11 bis 26, **dadurch gekennzeichnet, dass** der Profilkörper als Fenster- oder Türflügelrahmenprofil ausgebildet ist.

27. Hohlkammerprofil nach einem der Ansprüche 11 bis 23 oder 26, **dadurch gekennzeichnet, dass** das Schließelement (7) als Dreh-, Dreh-Kipp-, Kipp- oder Schwing-Beschlag ausgebildet ist.

28. Hohlkammerprofil nach einem der Ansprüche 11 bis 27, **dadurch gekennzeichnet, dass** das Schließelement (7) einen c-, u-, doppel-T-, doppel-C-förmigen oder zumindest annähernd runden, insbesondere kreisausschnittförmigen oder elliptischen, Querschnitt aufweist.

29. Hohlkammerprofil nach einem der Ansprüche 11 bis 28, **dadurch gekennzeichnet, dass** zwei oder mehrere Schließelemente (7) angeordnet sind.

30. Hohlkammerprofil nach Anspruch 29, **dadurch gekennzeichnet, dass** die Schließelemente (7) mit gegengleicher Bewegungsrichtung zueinander angeordnet sind.

31. Hohlkammerprofil nach einem der Ansprüche 11 bis 30, **dadurch gekennzeichnet, dass** das Schließelement (7) mit zumindest einem Dichtelement versehen ist.

32. Hohlkammerprofil nach einem der Ansprüche 11 bis 31, **dadurch gekennzeichnet, dass** das Schließelement (7) als Versteifungselement (16) für den Profilkörper (2) ausgebildet ist.

33. Hohlkammerprofil nach einem der Ansprüche 11 bis 32, **dadurch gekennzeichnet, dass** das Schließelement (7) eine Rasteinrichtung für das Schließmittel aufweist.

34. Hohlkammerprofil nach einem der Ansprüche 11 bis 33, **dadurch gekennzeichnet, dass** das Schließelement (7) an einer der Boden- bzw. den Seitenwänden (8-10) der Kammer (3) zugekehrten Wandung zumindest eine Ausnehmung bzw. zumindest einen Durchbruch aufweist.

35. Hohlkammerprofil nach Anspruch 34, **dadurch gekennzeichnet, dass** die Ausnehmung nutartig ist.

36. Hohlkammerprofil nach Anspruch 34, **dadurch gekennzeichnet, dass** die nutartige Ausnehmung zumindest eine Hinterschneidung aufweist.

37. Hohlkammerprofil nach Anspruch 36, **dadurch gekennzeichnet, dass** die nutartige Ausnehmung einen schwalbenschwanzförmigen Querschnitt aufweist.

38. Hohlkammerprofil nach einem der Ansprüche 11 bis 37, **dadurch gekennzeichnet, dass** das Schließelement (7) mehrteilig ausgebildet ist.

39. Hohlkammerprofil nach Anspruch 38, **dadurch gekennzeichnet, dass** zumindest einzelne Teile des Schließelementes (7) höhen- und/oder seitlich verstellbar ausgebildet sind.

40. Hohlkammerprofil nach einem der Ansprüche 11 bis 39, **dadurch gekennzeichnet, dass** mehrere Schließelement (7) über einen gemeinsamen Verstellmechanismus (50) verbunden angeordnet sind.

41. Hohlkammerprofil nach einem der Ansprüche 38 bis 40, **dadurch gekennzeichnet, dass** zumindest ein Teil des mehrteiligen Schließelementes (7) in einem weiteren Profilelement, z.B. einem Flügelrahmen, angeordnet ist.

42. Hohlkammerprofil nach einem der Ansprüche 11 bis 41, **dadurch gekennzeichnet, dass** das Schließelement (7) zumindest großteils im Profilwerkstoff verdeckt angeordnet ist.

## Claims

1. Method for manufacturing an extruded or bar extruded hollow-chamber profile for a window or a door, in particular a frame profile, a window wing profile, a door wing profile, wherein several chambers (3-6) are formed, with at least one, in particular profile-like, locking element (7) being accommodated in an at least partially positively locking way in at least one chamber (3) which is surrounded by a bottom wall (8) and at least one lateral wall (9) or at least two lateral walls (9, 10), by heating a profile material to a temperature, at which the profile material is at least pasty and subsequent shaping the hollow-chamber profile by means of a tool, **characterized in that** the locking element (7) is embodied as turn, turn, tilt, tilt or swing fitting or as known per se, for the engagement of a locking means, such as a locking pin, and that at least one locking element (7) is led to or inserted into the tool before or during the shaping and is at least partially surrounded by the profile material in a positive locking manner.

2. Method according to claim 1, **characterized in that** the at least one locking element (7) is inserted at a distance with respect to a wall of the tool or inserted into the latter.

3. Method according to claim 1 or 2, **characterized in that** the surface of the at least one locking element (7) is at least partly provided with an adhesive agent.

4. Method according to claim 3, **characterized in that** an adhesive agent of a polymerizable material is used.

5. Method according to one of the preceding claims, **characterized in that** a locking element (7) is used, having at least one depression (26) and/or at least one aperture in the wall of the locking element (7) facing the bottom wall (8) and/or at least one of the lateral walls (9, 10).

6. Method according to one of the preceding claims, **characterized in that** the chamber (3), wherein the at least one locking element (7) is accommodated, is manufactured having a covering element (17), in particular a covering wall, wherein after the shaping a depression (23) is inserted in discrete regions, wherein the engagement of a locking means, such as a locking pin of a window wing is provided.

7. Method according to claim 6, **characterized in that** the depression (23) is embodied as an aperture.

8. Method according to claim 6 or 7, **characterized in that** the covering element (17), in particular linked to one of the lateral walls (9, 10), is manufactured so that it can be swiveled.

9. Method according to one of claims 6 to 8, **characterized in that** in a transition region between the covering element (17) and a further wall of the hollow-chamber profile, a groove- or slot-like depression, in particular in the form of a living hinge, extending in the direction into longitudinal direction of the hollow-chamber profile, is embodied.

10. Method according to one of claims 6 to 9, **characterized in that** the covering element (17) is manufactured to have at least one lateral wall, which covers or replaces at least a part of the lateral wall (9, 10) of the hollow-chamber profile.

11. Hollow-chamber profile, manufactured by extrusion or bar extrusion according to the method of one of claims 1 to 10, for a window or a door having a profile body (2) having a total length in which profile body (2) several chambers (3-6) are formed, with in at least one chamber (3), which is surrounded by a bottom wall (8) and at least two lateral walls (9, 10), being accommodated an, in particular profile-like, locking element (7) in an at least partially positive-locking manner, **characterized in that** the at least one locking element (7) is connected to the bottom wall (8) and/or at least one of the lateral walls 89, 10) in a positive-locking manner.

12. Hollow-chamber profile, manufactured by extrusion or bar extrusion according to the method of one of claims 1 to 10, for a window or a door having a profile body (2) having a total length in which profile body (2) several chambers (3-6) are formed, with in at least one chamber (3), which is surrounded by a bottom wall (8) and at least two lateral walls (9, 10), being at least partially accommodated an, in particular profile-like, locking element (7) in an positive-locking manner, **characterized in that** the chamber (3) furthermore has a covering element (17), in particular a covering wall, and the covering element (17) is mounted to the profile body (2) so that it can be swiveled.

13. Hollow-chamber profile according to claim 11 or 12, **characterized in that** the at least one locking element (7) extends at least approximately along the total length of the profile body (2).

14. Hollow-chamber profile according to one of claims 11 to 13, **characterized in that** the at least one locking element (7) is disposed in discrete regions, wherein the engagement of a locking means, such as a locking pin of a window wing, is provided.

15. Hollow-chamber profile according to one of claims 11 to 14, **characterized in that** the at least one locking element (7) at least partly surrounds at least one lateral wall (9, 10) and/or one covering wall.

16. Hollow-chamber profile according to one of claims 11 to 16, **characterized in that** the chamber (3) is provided with an or the covering element (17) at least approximately along the entire total length.

17. Hollow-chamber profile according to one of claims 11 to 16, **characterized in that** the covering element (17) has a depression in discrete regions, wherein the engagement of a locking means, such as a locking pin of a window wing, is provided.

18. Hollow-chamber profile according to claim 17, **characterized in that** the depression is embodied to be an aperture (18).

19. Hollow-chamber profile according to one of claims 16 to 18, **characterized in that** the covering element is linked to at least one of the lateral walls (9, 10) of the chamber (3) so that it can be swiveled.

20. Hollow-chamber profile according to one of claims 12 or 16 to 19, **characterized in that** the covering element (17) is linked by means of a living hinge.

21. Hollow-chamber profile according to one of claims 12 or 16 to 20, **characterized in that** the covering element (17) forms at least a part of the at least lateral wall (9, 10) of the chamber (3).

22. Hollow-chamber profile according to one of claims 11 to 21, **characterized in that** the locking element (7) has at least one wing-like extension (34) that is anchored in the profile body (2).

23. Hollow-chamber profile according to claim 22, **characterized in that** the at least one wing-like extension (34) has at least one aperture (35).

24. Hollow-chamber profile according to one of claims 11 to 23, **characterized in that** the profile body (2) is embodied as a frame profile.

25. Hollow-chamber profile according to one of claims 11 to 24, **characterized in that** the locking element (17) is embodied as a lock plate.

26. Hollow-chamber profile according to one of claims 11 to 25 **characterized in that** the profile body is embodied as window or door frame profile.

27. Hollow-chamber profile according to one of claims 11 to 23 or 26, **characterized in that** the locking element (7) is embodied to be a turn, turn, tilt, tilt or swivel fitting.

28. Hollow-chamber profile according to one of claims 11 to 27, **characterized in that** the locking element (7) has a c, u, double-T, double-C shaped or at least approximately round, cross-section, in particular in the shape of a sector of a circle or ellipse.

29. Hollow-chamber profile according to one of claims 11 to 28, **characterized in that** one or several locking elements (7) are disposed.

30. Hollow-chamber profile according to claim 29, **characterized in that** the locking elements (7) are arranged having the identical but opposite movement direction.

31. Hollow-chamber profile according to one of claims 11 to 30, **characterized in that** the locking element (7) is provided with at least one sealing element.

32. Hollow-chamber profile according to one of claims 11 to 31, **characterized in that** the locking element (7) is embodied as stiffening element (16) for the profile body (2).

33. Hollow-chamber profile according to one of claims 11 to 32, **characterized in that** the locking element (7) has an engaging device for the locking means.

34. Hollow-chamber profile according to one of claims 11 to 33, **characterized in that** the locking element (7) has at least one recess or at least one aperture at a wall facing the bottom or the lateral walls (8 - 10) of the chamber.

35. Hollow-chamber profile according to claim 34, **characterized in that** the recess is groove-like.

36. Hollow-chamber profile according to claim 34, **characterized in that** the groove-like recess has at least one undercut.

37. Hollow-chamber profile according to claim 36, **characterized in that** the groove-like recess has a swallow-tailed cross-section.

38. Hollow-chamber profile according to one of claims 11 to 37, **characterized in that** the locking element (7) is embodied to be multipart.

39. Hollow-chamber profile according to claim 38, **characterized in that** at least individual parts of the locking elements (7) are embodied to be adjustable in height and/or laterally.

40. Hollow-chamber profile according to one of claims 11 to 39, **characterized in that** several locking elements (7) are disposed to be connected via one common adjustment mechanism (50).

41. Hollow-chamber profile according to one of claims 38 to 40, **characterized in that** at least one part of the multipart locking element (7) is disposed in a further profile element, e.g. a wing frame.

42. Hollow-chamber profile according to one of claims 11 to 41, **characterized in that** the locking element (7) is arranged to be largely covered inside the profile material.

## Revendications

1. Procédé de fabrication d'un profilé à chambre creuse extrudé ou filé pour une fenêtre ou une porte, plus particulièrement d'un profilé de châssis dormant, d'un profilé de vantail de fenêtre, d'un profilé de battant de porte, dans lequel plusieurs chambres (3-6) sont formées, et, dans au moins une chambre (3),entourée d'une paroi de fond (8) et d'au moins une paroi latérale (9) ou d'au moins deux parois latérales (9, 10), au moins élément de fermeture (7), plus particulièrement de forme profilée, étant logé au moins partiellement avec une complémentarité de forme, par chauffage d'un matériau de profilé à une température à laquelle le matériau de profilé est au moins visqueux et par un formage suivant du profilé à chambre creuse avec un outil, **caractérisé en ce que** l'élément de fermeture (7) est conçu comme une ferrure rotative, rotative-basculante, basculant ou oscillante ou, comme cela est connu en soi, pour l'emboîtement d'un dispositif de fermeture, par exemple d'un tenon de fermeture, et **en ce qu'**au moins un élément de fermeture (7) est introduit ou inséré dans l'outil avant ou pendant le formage et englobé par le matériau de profilé au moins partiellement avec une complémentarité de forme.

2. Procédé selon la revendication 1, **caractérisé en ce qu'**au moins un élément de fermeture (7) est inséré à une certaine distance d'une paroi de l'outil ou introduit dans celui-ci.

3. Procédé selon la revendication 1 ou 2, **caractérisé en ce que** la surface de l'au moins un élément de fermeture (7) est munie au moins partiellement d'un promoteur d'adhérence.

4. Procédé selon la revendication 3, **caractérisé en ce qu'**un promoteur d'adhérence en matériau polymérisable est utilisé.

5. Procédé selon l'une des revendications précédentes, **caractérisé en ce qu'**un élément de fermeture (7) est utilisé, qui comporte au moins une cavité (26) et/ou au moins un passage dans la paroi de fond (8) et/ou au moins une paroi de l'élément de fermeture (7) orientée vers les parois latérales (9, 10).

6. Procédé selon l'une des revendications précédentes, **caractérisé en ce que** la chambre (3), dans laquelle l'au moins un élément de fermeture (7) est logé, est réalisée avec un élément de recouvrement (17), plus particulièrement d'une paroi de recouvrement, dans laquelle, après le formage du profilé à chambre creuse, dans des zones discontinues, dans lesquelles l'emboîtement d'un élément de fermeture, par exemple un tenon de fermeture d'un vantail de fenêtre, est prévu, une cavité (23) est réalisée.

7. Procédé selon la revendication 6, **caractérisé en ce que** la cavité (23) est réalisée sous la forme d'un passage.

8. Procédé selon la revendication 6 ou 7, **caractérisé en ce que** l'élément de recouvrement (17), plus particulièrement articulé au niveau d'une des parois latérales (9, 10), est réalisé de manière pivotante.

9. Procédé selon l'une des revendications 6 à 8, **caractérisé en ce que**, dans une zone de transition entre l'élément de recouvrement (17) et une autre paroi du profilé à chambre creuse, une cavité en forme de rainure ou de gorge, s'étendant dans la direction d'une extension longitudinale du profilé à chambre creuse, est réalisée plus particulièrement sous la forme d'une charnière à film.

10. Procédé selon l'une des revendications 6 à 9, **caractérisé en ce que** l'élément de recouvrement (17) est réalisé avec au moins une paroi latérale, qui recouvre ou remplace au moins une partie d'une paroi latérale (9, 10) du profilé à chambre creuse.

11. Profilé à chambre creuse fabriqué par extrusion ou filage selon un procédé des revendications 1 à 10, pour une fenêtre ou une porte avec un corps profilé (2) présentant une longueur totale, dans lequel plusieurs chambres (3-6) sont formées, et dans au moins une chambre (3) entourée par une paroi de fond (8) et au moins deux parois latérales (9, 10), au moins un élément de fermeture (7), plus particulièrement de forme profilée, étant logé au moins partiellement avec une complémentarité de forme, **caractérisé en ce que** l'au moins un élément de fermeture (7) est relié avec la paroi de fond (8) et/ou au moins une des parois latérales (9, 10) avec une complémentarité de forme.

12. Profilé à chambre creuse fabriqué par extrusion ou filage selon un procédé des revendications 1 à 10, pour une fenêtre ou une porte avec un corps profilé (2) présentant une longueur totale, dans lequel plusieurs chambres (3-6) sont formées, et dans au moins une chambre (3) entourée par une paroi de fond (8) et au moins deux parois latérales (9, 10), au moins un élément de fermeture (7), plus particulièrement de forme profilée, étant logé au moins partiellement avec une complémentarité de forme, **caractérisé en ce que** la chambre (3) comprend en outre un élément de recouvrement (17), plus particulièrement une paroi de recouvrement, et l'élément de recouvrement (17) est supporté de manière pivotante sur le corps profilé (2).

13. Profilé à chambre creuse selon les revendications 11 ou 12, **caractérisé en ce que** l'au moins un élément de fermeture (7) s'étend au moins approximativement sur toute la longueur du corps profilé (2).

14. Profilé à chambre creuse selon les revendications 11 à 13, **caractérisé en ce que** l'au moins un élément de fermeture (7) est disposé dans des zones discontinues dans lesquelles l'emboîtement d'un dispositif de fermeture, par exemple un tenon de fermeture d'un vantail de fenêtre, est prévu.

15. Profilé à chambre creuse selon les revendications 11 à 14, **caractérisé en ce que** l'au moins un élément de fermeture (7) entoure, au moins partiellement, au moins une paroi latérale (9, 10) et/ou une paroi de recouvrement.

16. Profilé à chambre creuse selon les revendications 11 à 15, **caractérisé en ce que** la chambre (3) est munie d'un ou de l'élément de recouvrement (17) approximativement sur toute la longueur.

17. Profilé à chambre creuse selon les revendications 11 à 16, **caractérisé en ce que**, dans des zones discontinues, dans lesquelles l'emboîtement d'un dispositif de fermeture, par exemple un tenon de fermeture d'un vantail de fenêtre, est prévu, l'élément de recouvrement (17) comprend une cavité.

18. Profilé à chambre creuse selon la revendication 17, **caractérisé en ce que** la cavité est conçue comme un passage (18).

19. Profilé à chambre creuse selon l'une des revendications 16 à 18, **caractérisé en ce que** l'élément de recouvrement est articulé de manière pivotante au niveau d'au moins une des parois latérales (9, 10) de la chambre (3).

20. Profilé à chambre creuse selon l'une des revendications 12 ou 16 à 19, **caractérisé en ce que** l'élément de recouvrement (17) est articulé à l'aide d'une charnière à film.

21. Profilé à chambre creuse selon l'une des revendications 12 ou 16 à 20, **caractérisé en ce que** l'élément de recouvrement (17) forme une partie d'au moins une paroi latérale (9, 10) de la chambre (3).

22. Profilé à chambre creuse selon l'une des revendications 11 à 21, **caractérisé en ce que** l'élément de fermeture (7) comprend au moins une extension (34) en forme d'ailette qui est ancrée dans le corps profilé (2).

23. Profilé à chambre creuse selon la revendication 22, **caractérisé en ce que** l'au moins une extension en forme d'ailette (34) comprend au moins un passage (35).

24. Profilé à chambre creuse selon l'une des revendications 11 à 23, **caractérisé en ce que** le corps profilé (2) est conçu comme un profilé de châssis dormant.

25. Profilé à chambre creuse selon l'une des revendications 11 à 24, **caractérisé en ce que** l'élément de fermeture (17) est conçu comme une tôle de fermeture.

26. Profilé à chambre creuse selon l'une des revendications 11 à 26, **caractérisé en ce que** le corps profilé est conçu comme un profilé de châssis de vantail de fenêtre ou de battant de porte.

27. Profilé à chambre creuse selon l'une des revendications 11 à 23 ou 26, **caractérisé en ce que** l'élément de fermeture (7) est conçu comme une ferrure rotative, rotative-basculante, basculante ou oscillante.

28. Profilé à chambre creuse selon l'une des revendications 11 à 27, **caractérisé en ce que** l'élément de fermeture (7) présente une section transversale en forme de C, de U, de double T, de double C ou au moins approximativement ronde, plus particulièrement en forme d'arc de cercle ou elliptique.

29. Profilé à chambre creuse selon l'une des revendications 11 à 28, **caractérisé en ce que** deux éléments de fermeture (7) ou plus sont prévus.

30. Profilé à chambre creuse selon la revendication 29, **caractérisé en ce que** les éléments de fermeture (7) sont disposés avec des directions de mouvements opposées l'un par rapport à l'autre.

31. Profilé à chambre creuse selon l'une des revendications 11 à 30, **caractérisé en ce que** l'élément de fermeture (7) est muni d'au moins un élément d'étanchéité.

32. Profilé à chambre creuse selon l'une des revendications 11 à 31, **caractérisé en ce que** l'élément de fermeture (7) est conçu comme un élément de rigidification (16) pour le corps profilé (2).

33. Profilé à chambre creuse selon l'une des revendications 11 à 32, **caractérisé en ce que** l'élément de fermeture (7) comprend un dispositif d'encliquetage pour le dispositif de fermeture.

34. Profilé à chambre creuse selon l'une des revendications 11 à 33, **caractérisé en ce que** l'élément de fermeture (7) comprend, au niveau d'une paroi orientée vers les parois de fond ou latérales (8 - 10) de la chambre (3), un évidement ou au moins un passage.

35. Profilé à chambre creuse selon la revendication 34, **caractérisé en ce que** l'évidement présente la forme d'une gorge.

36. Profilé à chambre creuse selon la revendication 34, **caractérisé en ce que** l'évidement en forme de gorge comprend au moins une contre-dépouille.

37. Profilé à chambre creuse selon la revendication 36, **caractérisé en ce que** l'évidement en forme de gorge présente une section transversale en forme de queue d'aronde.

38. Profilé à chambre creuse selon l'une des revendications 11 à 37, **caractérisé en ce que** l'élément de fermeture (7) est conçu en plusieurs parties.

39. Profilé à chambre creuse selon la revendication 38, **caractérisé en ce qu'**au moins certaines parties de l'élément de fermeture (7) sont conçues de manière réglables en hauteur et/ou latéralement.

40. Profilé à chambre creuse selon l'une des revendications 11 à 39, **caractérisé en ce que** plusieurs éléments de fermeture (7) sont disposés de façon à être reliés par un mécanisme de réglage (50) commun.

41. Profilé à chambre creuse selon l'une des revendications 38 à 40, **caractérisé en ce qu'**au moins une partie de l'élément de fermeture (7) en plusieurs parties est disposé dans un autre élément profilé, par exemple un vantail.

42. Profilé à chambre creuse selon l'une des revendications 11 à 41, **caractérisé en ce que** l'élément de fermeture (7) est disposé, au moins en ce qui concerne sa majeure partie, de façon à être dissimulé dans le matériau du profilé.
